# EUROPEAN PATENT SPECIFICATION

(11) **EP 2 904 066 B1**
(45) Date of publication and mention of the grant of the patent: **19.09.2018**
(21) Application number: 13773795.3
(22) Date of filing: 08.10.2013
(51) Int. Cl.: C09K 8/594, E21B 43/16

(54) **A METHOD FOR RECOVERING OIL**
VERFAHREN ZUR GEWINNUNG VON ERDÖL
PROCÉDÉ POUR LA RÉCUPÉRATION DE PÉTROLE

(30) Priority: 08.10.2012 EP 12187688
(43) Date of publication of application: 12.08.2015
(73) Proprietor: Total E&P Danmark A/S, 2100 København Ø (DK)
(72) Inventor: MCGUIRE, Patrick Lee, DK-1263 København K (DK)
(74) Representative: Zacco Denmark A/S
(86) International application number: PCT/EP2013/070985
(87) International publication number: WO 2014/056948

(56) References cited:
- EP-A1- 2 239 415
- US-A- 3 065 790
- US-A- 4 848 466
- US-A1- 2002 036 086
- US-A1- 2011 278 002
- US-A1- 2011 306 525
- US-A1- 2012 085 555
- US-A1- 2012 247 105
- P.L. MCGUIRE ET AL: "Low salinity oil recovery: An exciting new EOR opportunity for Alaska's North Slope", SPE, 93903, 30 March 2005 (2005-03-30), - 1 April 2005 (2005-04-01), pages 422-436, XP009092800,

## Description

### Field of the Invention

This invention relates to a method for recovering oil and other hydrocarbons from a subterranean formation.

### Background of the Invention

Various enhanced (secondary or tertiary) oil recovery methods have been utilized to treat production wells and other subterranean formations in order to increase petroleum, gas, oil or other hydrocarbon production. The effectiveness of such methods in oil recovery is broadly described by a given method's contribution to macroscopic oil displacement - determined by both horizontal and vertical sweep efficiency - and microscopic oil displacement.

Historically, one recovery method has involved using water to displace oil in the field and to effectively push the oil to a collector point: chemicals, such as surfactants, have been added to alter the flow and mixing properties of the oil/water mixture that is obtained. One such method is described in US 2012/085555. This method comprises passing an aqueous displacement fluid via an injection well in a water-flooding process and a process reducing the salinity by passing the water through one mineral having a negative zeta potential. Problematically, this method tended to leave relatively large fractions of oil in the field and often the injected water made residual oil fractions harder to recover.

An alternative, established method has been to use gases - such as nitrogen, oxygen, carbon dioxide and C₁-C₄ alkanes - to displace oil. Whilst gas efficiently displaces oil in a vertical, downward displacement that is aided by gravity, oil displacement by predominantly horizontal gas is inefficient because of the low viscosity of the gas relative to the oil: in a horizontal flow, the gas "fingers" through the oil, giving poor conformance and resulting in a low recovery factor (Rf). Further, whilst methane is easily sourced by re-injecting natural gas obtained during oil recovery, the availability of other pressurized gas may be limited, making gas displacement methods relatively expensive. It is often hard to maintain the pressure once a major part of the oil has been recovered, and some collapse of the field structure might occur. And not all gases are viable for injection into a given oil field: nitrogen gas is fairly inert but it is relatively expensive to obtain; and, oxygen, as a pure gas, may present a combustion hazard when combined with flammable materials, such as oil and methane gas.

As water and gas displacement methodologies independently have disadvantages, certain combined methods of enhanced oil recovery have been developed, including simultaneous water and gas injection (SWAG) and water-alternating-gas injection (WAG). A method of such is described in US 4.848.466, which discloses a WAG process, comprising three steps, (a) injection of a solvent, followed by (b) injection of solvent and water and by (c) injection of water into an injection well.

The WAG method - which is the subject of the present application - is concerned with the intermittent injection of water and gas into the subterranean formation. Broadly, its purpose is to combine the improved microscopic displacement efficiency of gas flooding with an improved macroscopic sweep of water injection, thereby yielding an overall improved oil recovery as compared to pure water or pure gas injection. The injected water is intended to decrease the mobility of the injected gas by lowering the relative permeability of the formation to that gas and thereby control gas fingering and poor conformance. Compositional exchanges in WAG processes can also influence fluid densities and viscosities to give additional oil recovery.

Many different gas types has been used in WAG floods - as both miscible and immiscible gas injections - but CO₂ injection has typically generated improved oil recovery when compared on a like for like basis with methane and nitrogen. The higher recovery from CO₂ injections may result from its miscibility in many oil formations at reasonable reservoir pressures while other gases may not reach this point unless very high pressures are applied.

Despite this utility, certain disadvantages of using carbon dioxide in WAG floods have been identified. Capillary pressures within the reservoir can cause water to be drawn into the zone saturated with CO₂, both from above and below: the resultant lowering of the CO₂ in said zone lowers its mobility, and therefore decreases the distance it can penetrate into the reservoir before gravity segregation moves it to the top of the formation, the macroscopic sweep efficiency of CO₂ thus being diminished. Individual stratum within facies can possess highly variable permeability to CO₂ flooding and, consequently, CO₂ may tend to channel through higher permeability strata. I.e. an individual stratum i.e. a layer of sedimentary rock or soil, within facies can possess highly variable permeability to CO₂ flooding and, consequently, CO₂ may tend to channel through higher permeability strata. At high concentrations, injected CO₂ can destabilize asphaltenes. The injectivity of water and CO₂ commonly declines over time - particularly in carbonate rock formations - due to mineral scale deposition from the injection waters. US Patent No. 4,846,276 (Marathon Oil) suggests that WAG methods using flooding may be less effective where the oil-producing stratum or zone contains a residual light crude oil. And, importantly, CO₂ may not be available in sufficient volumes or cannot be economically transferred to the oil bearing formation.

There is therefore clearly a need to optimize oil recovery from WAG processes in which is employed as an injected gas.

Moreover, according to aspects of the present invention, there may be enabled improved oil recovery from a subterranean formation by continuously controlling the salinity of the water used in a water-alternating-gas injection (WAG) process which i.e. makes it possible to use production water as a source.

In practice, the field conditions used for WAG processes using CO₂ (e.g. CO₂ flooding) are often derived by scaling up computational models. This is however often unsatisfactory. In part, such models cannot satisfactorily account for the hysteresis behaviour of relative permeabilities and capillary pressure when fluid saturations experience cyclic changes. Whilst the effectiveness of a particular in-field WAG regime utilizing CO₂ flooding may be monitored, the user cannot easily depart from the modelled conditions and as such cannot respond flexibly to injectivity declines and to variations in the movement of oil displacement fronts within facies, for instance.

### Statement of the Invention

In accordance with a first aspect of the present invention, there is provided a method for the recovery of oil or other hydrocarbon deposits from a subterranean formation, said method comprising the steps of: a) providing production water, said production water is brought to the surface during oil and gas production and has a first salinity; b) processing said production water by dilution to form an aqueous fluid having a salinity lower than said first salinity; c) injecting said formed aqueous fluid into the subterranean formation sequentially either prior to and / or subsequent to the injection of a second fluid comprising carbon dioxide into said formation; and, d) collecting hydrocarbons displaced by the injected fluids, wherein the method further comprising the step of combusting a fraction of the recovered oil and / or hydrocarbon deposits, and wherein water condensed from the products of combustion of said recovered oil and / or hydrocarbon deposits is used in step b) to dilute said production water. The second injected fluid may be either carbon dioxide or a mixture containing carbon dioxide.

The aqueous fluid, is derived from the production water which has been brought to the surface during oil and gas production and, where necessary, separated from that oil and gas. In this manner, the present invention can provide a simple, convenient and local use for that produced water. The obviation of the need to dispose of the production water can have a positive impact on the feasibility of this WAG process, particularly in remote locations. And the coupling of this use of production water to carbon sequestration by CO₂ injection presents a clear environmental benefit.

The provision of a processing step b) in the present invention enables the operative to quickly change the salinity of the injected aqueous fluid relative to the production water. These changes can commonly be made in response to monitoring of the production water itself as it is recovered and in response to the monitoring of the progression of one or more fronts of displacement of oil or other hydrocarbons within the subterranean formation, for instance through direct observation using seismic methods of surveillance wells or through indirect observation using volumetric methods, tracers and / or pressure analysis at the production and / or injection wells.

In a preferred embodiment of the present invention, the injection step c) is characterized as comprising a plurality of cycles, each cycle comprising the sequential injection of the processed aqueous fluid and the second fluid comprising carbon dioxide. The injected aqueous fluid of each cycle may have the same or different salinity and the same or different composition - of surface active agents and the like. Without being bound by theory, the fact that one is not constrained by a single water source as the injectant, will allow for the interfacial tension between the water and carbon dioxide phases within the formation to be modified. This in turn may mitigate the aforementioned detrimental effects of capillary pressure changes within the reservoir.
the method of the present invention further comprises the step of combusting a fraction of the recovered oil and / or hydrocarbon deposits. The combustion products is utilized as a source of water. Water, as a condensation product, is used to lower the salinity of the production water produced with the extracted oil and hydrocarbons.

In a further preferred embodiment, the method of the present invention is supplemented by the steps of separating nitrogen and oxygen from air. The separated oxygen may then be used in the combustion of recovered oil and / or hydrocarbon deposits. Moreover, the separated nitrogen may then be used as a gaseous injectant into the subterranean formation, either by itself or in combination with carbon dioxide.

It is observed that certain constraints are placed on prior art WAG processes by the physical availability of carbon dioxide and of replacement miscible or immiscible gases for said CO₂ and the economic viability of making such replacements. The application of these two preferred embodiments, either alone or in combination, removes certain of those constraints. The *in situ* energy expenditure in modifying the temperature, pressure and chemistry of injected components can also be controlled through these embodiments, given that the physico-chemical properties of water as a condensation product, carbon dioxide as a combustion product, and nitrogen and oxygen as products of air separation processes are themselves controllable.

In an optional embodiment, the method of the invention may further comprise the step of combusting a fraction of the recovered oil and / or hydrocarbon deposits, wherein at least part of the injected carbon dioxide is obtained as a product of combustion of recovered oil and / or hydrocarbon deposits, and
wherein water condensed from the products of combustion of said recovered oil and / or hydrocarbon deposits is used in step b) to dilute said production water.
an apparatus or system for performing the present method will. Preferably be characterized by comprising: a unit for the separation of production water from the fluid mixture brought to the surface in the recovery of the oil or other hydrocarbon deposits from a subterranean formation which may lie below a surficial formation; means for lowering the salinity of said production water; and, at least one injector unit for introducing injectants under pressure into said subterranean formation.

### BRIEF DESCRIPTION OF THE DRAWINGS

Aspects of the invention are illustrated by way of non-limiting examples in which:
Figure 1 is a schematic illustration of a method in accordance with the present invention.
Figure 2 shows one embodiment of a system for use in a method in accordance with the present invention.
Figure 3 shows an embodiment of a system for use in a method in accordance with the present invention.
Figure 4 shows a system for controlling the method of the present invention.
Figure 5 depicts a number of examples of flow profiles that may be employed in the method of the present invention.

### DETAILED DESCRIPTION OF THE INVENTION

### Definitions

As recognised in the art, salinity is a measure of the amount of dissolved particles and ions in water.

As described by Collins, A. G. in Geochemistry of Oilfield Waters, Elsevier, New York 1975, most oil and gas wells produce a saline solution, or brine, in addition to the desired oil and gas. Such saline solutions / brines generally have moderate to high salinities - for example from 5,000 to 270,000 mg/L dissolved solids - and their major solutes are sodium and calcium chlorides, which are accompanied by a wide range of other solutes at lower concentrations. The term "brine" may refer to water with more than 35,000 mg/L total dissolved solids (Hem, J. D., 1985, Study and interpretation of the chemical characteristics of natural water: U.S. Geological Survey Water-Supply Paper 2254, 264), the term "production water" is used herein to denote the chloride-rich waters found in sedimentary environments and brought to the surface during oil and gas production and will thus incorporate variously oil-field brines, oil-and-gasfield brines, sedimentary-basin brines, and saline formation water often found in the art.

Connate water or production water is water that is separated from the oil that is produced from a production well, the connate water or produced water may have a TDS content in the range of 2000 to 300,000 ppm TDS. The use of connate water or produced water as a source of the water for the aqueous displacement fluid may be especially advantageous where there are restrictions on disposal of connate water or produced water.

The salinity analyses define the compositions of the production water at the time it was sampled at the surface. As production water may have undergone a number of changes during accumulation in the well bore, travel to the surface, and sampling, this may not reflect the salinity of the brine at depth in the reservoir rocks.

### The Aqueous Fluid Injectant

In the first step of the present invention, production water is provided which is characterized by a first salinity. To form the aqueous fluid injectant, the salinity of the production water is then lowered by dilution with one or more lower salinity aqueous fluids.

The diluting liquid may comprise or consist of water condensed from the reaction products of an *in situ* combustion process of recovered hydrocarbons.

The aqueous fluid injectant has a lower salinity than the production water. In a preferred but not limiting embodiment, the average dissolved salt content of the injected, processed aqueous fluid is less than 10,000 ppm total dissolved solids (TDS), preferably less than 5,000 ppm TDS, more preferably less than 2,000 ppm TDS. Alternatively or additionally, the injected, processed aqueous fluid may have a multivalent cation content lower than 0.02 mol %, preferably less than 0.005 mol %.

As is known in the art, the processed aqueous fluid to be injected into the subterranean formation may further comprise chemical additives e.g. a chemical additive or a combination of one or more chemical additives, such as e.g. surfactants, polymers such as polyacrylamides, alkylpolyglycosides (APG), alkalis, polypeptides, enzymes, microbes or nano-materials.

The choice of any included surfactants is not intended to be limiting on the present invention. Suitable surfactants are disclosed in, for instance: US Patent No. 4,113,011; US Patent No. 4,380,266; US Patent No. 4,502,538; US Patent No. 4,739,831; US Patent No. 5,363,915; and, US Patent No. 5,502,538. As taught in US Patent No. 4,860,828 (Oswald et al.), the aqueous fluid may also include at least one solubilizing component in an amount effective to increase the brine tolerance of the surfactant composition.

The pH of the aqueous fluid injectant may be any which will function in the process of this invention, but will typically be from 3 to 10 and should preferably be from 5 to 10. The un-dissolved solids content - that is the content of particulates and fines - of the aqueous fluid injectant should be less than 2000 ppm, preferably less than 1000 ppm and more preferably less than 500 ppm.

### The Second Injectant Comprising CO₂

The physical state of CO₂ varies depending on pressure and temperature; it can exist as a solid, liquid, vapor (gas) or a supercritical fluid. Carbon dioxide is in a liquid phase when subjected to a pressure of about 1,000 psi (68.9 Bar) and a temperature below about 31 °C. In addition, the carbon dioxide can transition to a supercritical phase when, at a pressure of about 1,000 psi (69 Bar), the temperature rises above 31 °C.

In embodiments of the present disclosure, the carbon dioxide is injected, through wells, into the reservoir formation under conditions of pressure and temperature wherein the carbon dioxide may be either in a supercritical phase or a liquid phase. As used herein, the term "dense phase" is a collective term for CO₂ when it is in either the supercritical or liquid states. For most oil recovery projects, economics will drive the need for any transport of CO₂ to the injection wells to be in its dense phase since vapor phase transmission would require considerably larger diameter pipelines for the same mass flow rate. As the injected dense phase carbon dioxide descends in the wellbore, it is heated by a naturally increasing temperature, causing it to become more gas-like within the wellbore or in the formation in the immediate vicinity of the wellbore.

As the second fluid of the present invention, the dense phase carbon dioxide may be co-injected with one or more non-condensable gases including but not limited to nitrogen, natural gas, C1-C4 alkanes, ethylene, hydrogen sulfide, carbonyl sulfide, air, combustion flue gas, argon and mixtures thereof. Of these, nitrogen, natural gas, C1-C4 alkanes, argon and combustion flue gas are preferred as they may be sourced *in situ,* either directly from the recovered hydrocarbons, by combustion of a fraction of recovered hydrocarbons or by air separation processes. However, as co-injected nitrogen and carbon dioxide may separate out in the subterranean formation due to density differences - causing nitrogen to move to the top of the reservoir - any simultaneous injection of these two gases is preferably performed at a molar ratio of N₂ to CO₂ of less than 1:10, preferably less than 1:20. Accordiongly, as such, the second fluid may be constituted by a mixture of gases where carbon dioxide is one of the gases.

Furthermore, the second fluid may comprise additives, typically in an amount up to 5 wt.%, based on the weight of the second fluid injectant, said additives including, but not limited to, surfactants, corrosion inhibitors, co-surfactants, scale inhibitors, and mixtures thereof.

### Illustrative Embodiments of the Invention

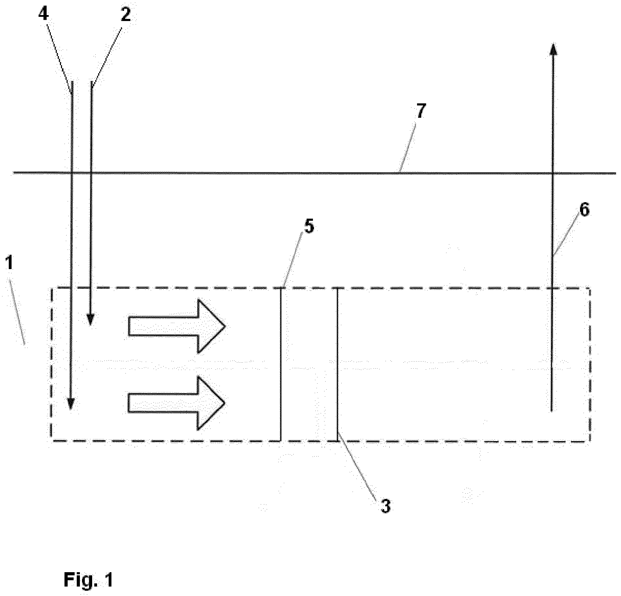

Figure 1 schematically shows the method according to the invention as applied to a subterranean formation in which oil and / or other hydrocarbons are retained. The subterranean formation will typically have a temperature of from 40°C to 130°C. The subterranean formation may be either a single or multi-layer system wherein individual layers are distinguished by their permeability. In the latter case, each layer may be in communication with layers above or below it, in that, depending on the permeability of those adjacent layers, fluids may migrate from one layer into the other through the interface there-between.

By injecting the aqueous liquid (2), as defined above, into the formation (1), oil is displaced through the formation in the displacement direction indicated by the arrows, creating a first displacement front (3). Similarly, a second gaseous injectant (4) comprising carbon dioxide, here introduced subsequently to the aqueous liquid injectant, will also displace the oil therein and create an independent displacement front (5). The progress of the displacement fronts (3,5) should preferably be controlled and kept within predetermined limits, dependent on the parameters of a specific field. Oil from the formation (1) is pushed towards the one or more production pipes (6); an extraction pump (not shown) will draw the oil into the pipes and transport it upwards towards the surface (7).

Although the figure shows vertical pipes, the injection and production wells may also be disposed at an angle to the vertical, as known in the art.

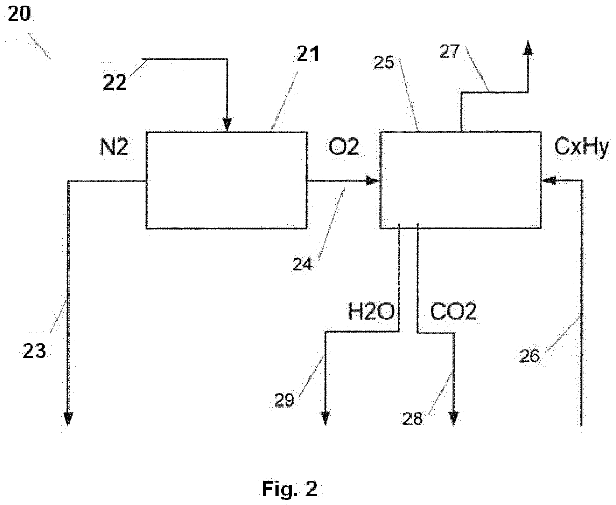

Figure 2 shows a system (20) that can be used for the supply of injectants for the method described in Figure 1. The system comprises an air separation unit (21) that separates incoming air (22) into its main components, nitrogen gas (23) and oxygen (24). The nitrogen gas may then be used as an injectant. The oxygen (24) is transported to a combustion unit (25) that combusts fuel (26) that may itself comprise oil and gas derived from an oil production method, in particular the method as described in figure 1. The combustion unit (25) produces energy (27), as well as carbon dioxide (28) and water (29), which may both be processed for use as injectants in the method described in Figure 1. For example, the carbon dioxide (28) may be subject to: compression or decompression to achieve the desired injection pressure; cooling or heating to achieve the desired injection temperature; and, optionally mixture with other injectants. Moreover, the water (29) may be mixed with production water to lower the salinity of that production water and thus form the aforementioned aqueous liquid injectant, which may in turn be further processed to its desired injection temperature and pressure.

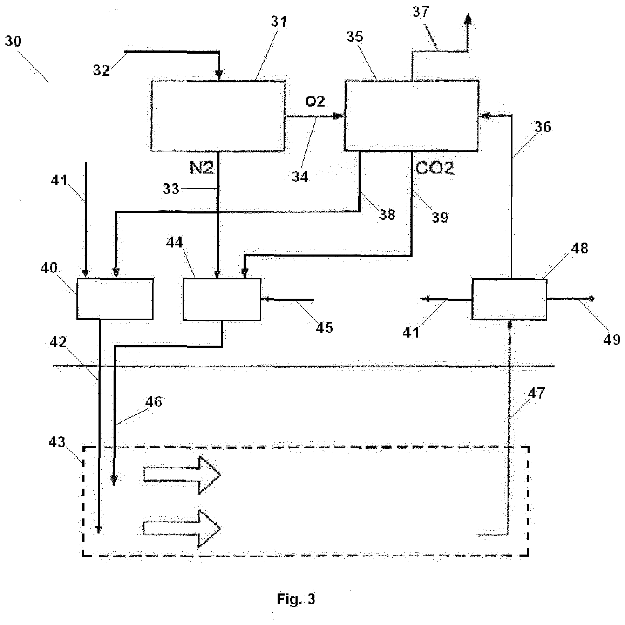

Figure 3 shows a method (30), wherein an air separator unit (31) separates air (32) into nitrogen gas (33) and oxygen (34). The oxygen is used in a combustion unit (35) to combust fuel (36), yielding energy (37), water (38) and carbon dioxide (39) as main products. The water (38) from the combustion unit (35) is lead to a first injector unit (40). In the injector unit (40), the water is brought to the desired temperature and pressure and is mixed with production water (41) and, optionally other liquids and/or flow-affecting compounds such as surfactants. Subsequently, the derived aqueous liquid (42) is injected into the formation (43) to displace oil and/or gas there-form. The carbon dioxide (39) and nitrogen gas (33) are independently transportable to a second injector unit (44): in this injector unit (44), the gases are either independently or in admixture brought to the desired temperature and pressure for injection. Optionally, additional gases (45) are added from external sources, such as additional carbon dioxide, nitrogen gas and / or C₁-C₄ alkanes. The gaseous injectants (46) are then injected into the formation (43) to displace oil and/or gas.

The oil and/or gas so displaced from the formation is then collected at a distance from the injector positions through one or more oil wells (47) connected to a collector unit (48). Gravity, chemical reaction or a combination thereof are used to separate off production water present in the fluid mixture brought to the surface, mixed with the oil or gas produced. From the collector unit (48), part of the collected and separated oil and/or gas is transported away as produced gas and/or oil (49). Optionally, part of the produced hydrocarbons is lead to the combustion unit (35) as fuel (36). Similarly, from the collector unit at least a portion of the separated production water is led to injector unit (40) for mixture with water (38) from the combustion unit.

The method of the present invention is applied to a subterranean, oil-bearing permeable formation penetrated by at least one injection well and at least one spaced-apart production well. The injection well and production well are perforated to establish fluid communication with a substantial portion of the formation.

While oil recovery may be carried out by employing only two wells, the present invention is not limited to any particular number of wells. Purposively, a field will incorporate a planned distribution of gas-injection wells to maintain reservoir pressure and effect an efficient sweep of recoverable liquids; the present invention may thus be practiced using a variety of patterns such as an inverted five spot pattern in which an injection well is surrounded with four production wells, or an in-line drive using a series of aligned injection wells and a series of aligned production wells. Further well patterns are illustrated in US Patent No. 3,927,716 (Burdyn et al.). The physical characteristics of a formation - namely its thickness, width, fracture gradient, and vertical and horizontal permeability- should determine both well spacing and any injection rate.

The depth within the formation at which the first aqueous fluid, the second and further injectants are injected is not intended to be limited. For instance, the aqueous fluid and the second injectant may be introduced at the same depth. Alternatively, they may be introduced at different depths; carbon dioxide might favourably be introduced at the base of the oil-bearing facies and the aqueous fluid at a higher point.

The injection rate through a given injection well is limited by the pressure at which the reservoir will hydraulically fracture. The "hydraulic fracturing pressure" or "hydraulic fracture pressure" may be determined by a number of methods known in the art: a "mini-frac" or "step-rate" fluid injection test may be mentioned here as a non-limiting Example thereof.

The pressure at which any gas is injected to the formation should be within a range which is below the formation fracturing pressure. Factors considered in selecting the actual gas injection pressure also include the incremental oil recovery which can be achieved for a given pressure, the required volume of gas, and the energetic or material cost of compressing gas to a given pressure. This energetic cost can be mitigated in the present invention by using the energy (27, 37) released by combustion of a portion of the recovered hydrocarbons.

The processed aqueous fluid and said second fluid are generally each injected into the formation for a period of from 0.1 to 500 days duration. Whilst the present method may be terminated after a single injection of each fluid, the processed aqueous fluid and the second fluid are preferably injected in alternating cycles, the duration of each aqueous fluid injection step and each second fluid injection step being independently selected from the aforementioned period of from 0.1 to 500 days. A given cycle may be punctuated by the injection of one or more alternative injectants.

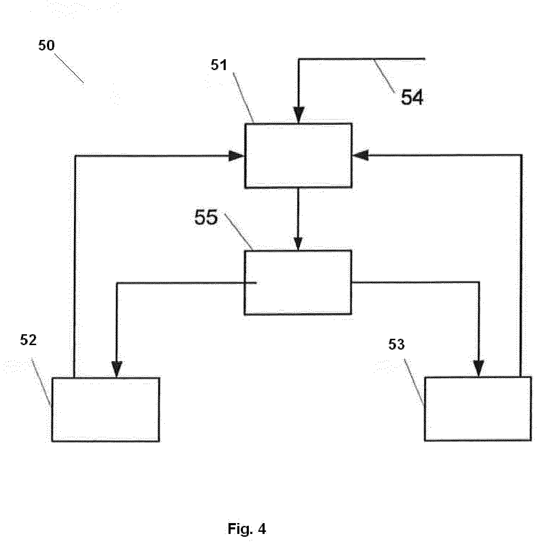

Figure 4 schematically depicts a system (50) for controlling a method as shown in Figures 1 and 3, and more particularly to control the progress of hydrocarbon displacement in producing layer(s). A control unit (51) receives input from monitoring sensors of the first injector (52) that regulates the injection of a first gaseous or liquid injectant into a given layer, and a second injector (53) that regulates the injection of a second gaseous or liquid injectant into that layer or a distinct, second layer. Optionally, the control unit (51) also receives external monitoring data (54), for instance pressure changes (drops) from the production, injection and / or surveillance wells and/or seismic monitoring data.

The control unit (51) compares the progress of the injectants in the layer(s). Where the progress of the injectants fails to fall within certain thresholds - as described above - the control unit (51) instructs an adjusting unit (55) to adjust *inter alia* the injection ratio of the first injector (52) and the second injector (53). It will be understood that this system (50) can be extended to control run for more than 2 injectors (52, 53) simultaneously.

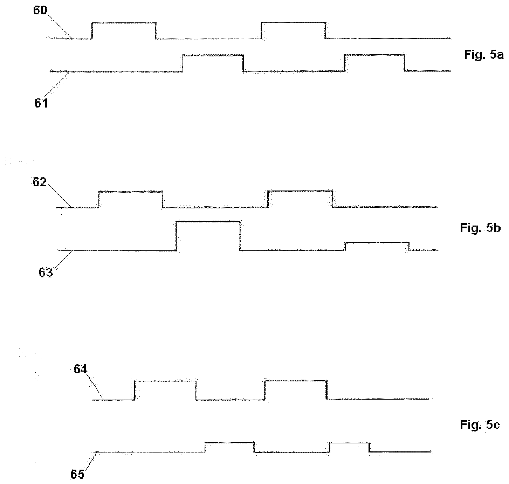

The level of oil recovery is a major determinative of the duration and volume of each fluid injection sequence: for instance, where the level of oil recovery resulting from the aqueous fluid injection peaks and then declines, at some predetermined point on the decline curve, the injection sequence for that particular fluid may be terminated and the injection sequence for the second fluid begun. In the present invention, the operative can quickly respond to any decline in oil recovery using very short duration injection cycles and can - in addition or alternatively - rapidly change the composition of the injected fluid using compounds and processes available *in situ.* Figure 5 describes examples of flow profiles that may be used in the present method and which are reflective of the flexibility thereof.

Figure 5a shows a sequential injection profile, schematically showing the injected volumes of injectants over time. The time scale for this method is typically weeks, months or years. The upper line (60) shows the first aqueous liquid injectant, whereas the lower line (61) shows the second injectant which comprises carbon dioxide. In this profile the injectants are injected intermittently but for equivalent volumes and durations according to a predetermined sequence.

Figure 5b shows an alternative sequential injection profile, schematically showing the injected volumes of injectants over time. The upper line (62) shows the first aqueous injectant, whereas the lower line (63) shows the second injectant comprising carbon dioxide. In this profile the injectants are injected sequentially but the volumes of the second injectant are varied for given interval and injection.

Figure 5c shows a still further alternative sequential injection profile, schematically showing the injected volumes of injectants over time. The upper line (64) shows the first aqueous injectant, whereas the lower line (65) shows the second injectant comprising carbon dioxide. In this profile the injectants are injected sequentially but the interval of injection of the second injectant is varied over time.

It will be recognized that these illustrated injection profiles are not mutually exclusive but over time one or more of these profiles may be employed. Moreover, the injection profiles for the first and second injectants as illustrated in Figures 5b and 5c may be inverted, such that it is the volume and interval of injection of the first aqueous liquid injectant which is varied. These injection profiles are further independent of the physic-chemical properties of the first and second injectants as used at a given time.

Importantly, the injected volumes of the aqueous, second and optionally further fluids of the present method are monitored by *inter alia* pumps, meters and check valves as is known in the art. In a preferred embodiment of the present invention, the ratio by volume of total injected aqueous fluid and total injected second fluid in a single injection cycle - the WAG ratio - is in the range from 0.8: 1 to 5:1. It also within the scope of the present invention to employ "tapering" of the WAG ratio - that is increasing the WAG ratio e.g. from 1:1 to 2:1 to 3:1, at decreased gas slug size - in order to decrease the required gas production and therefore improve the overall economics of the process.

The process of the present invention should typically be continued until the amount of oil recovered from the formation renders it unfavorable.

The principle of the invention and the preferred embodiments contemplated for applying that principle have been described. It is to be understood that the foregoing is illustrative only and that other means and techniques can be employed without departing from the scope of the invention defined in the following claims.

In further aspects, this invention may in particular relate to a method for recovering oil and other hydrocarbons from a subterranean formation using a water-alternating-gas injection (WAG) process.

## Claims

1. A method for the recovery of oil or other hydrocarbon deposits from a subterranean formation, said method comprising the steps of:
a) Providing production water, said production water is brought to the surface during oil and gas production and has a first salinity;
b) Processing said production water by dilution to form an aqueous fluid having a salinity lower than said first salinity;
c) Injecting said formed aqueous fluid into the subterranean formation sequentially either prior to and / or subsequent to the injection of a second fluid comprising carbon dioxide into said formation; and,
d) Collecting hydrocarbons displaced by the injected fluids,
wherein the method further comprising the step of combusting a fraction of the recovered oil and / or hydrocarbon deposits, and wherein water condensed from the products of combustion of said recovered oil and / or hydrocarbon deposits is used in step b) to dilute said production water.

2. The method according to claim 1, wherein the aqueous fluid is injected as a liquid and second fluid comprises dense phase carbon dioxide.

3. The method according to claim 1 or claim 2, wherein the average dissolved salt content of the injected, processed aqueous fluid is less than 10,000 ppm total dissolved solids (TDS), preferably less than 5,000 ppm TDS, more preferably less than 2,000 ppm TDS.

4. The method according to claim 1 or claim 2, wherein the injected, processed aqueous fluid has a multivalent cation content lower than 0.02 mol %, preferably less than 0.005 mol %.

5. The method according to any one of claims 1 to 4, wherein said processed aqueous fluid is injected into the subterranean formation before said second fluid.

6. The method according to any one of claims 1 to 5, wherein said processed aqueous fluid and said second fluid are each injected for a period of from 0.1 to 500 days duration.

7. The method according to any one of claims 1 to 6, wherein said injection step c) is characterized as comprising a plurality of cycles, each cycle comprising the sequential injection of the processed aqueous fluid and the second fluid comprising carbon dioxide.

8. The method according to any one of claims 1 to 7, wherein the ratio by volume of total injected aqueous fluid and total injected second fluid in a single injection cycle is in the range from 0.8:1 to 5:1.

9. The method according to claim 1-8, wherein at least part of the injected carbon dioxide is obtained as a product of combustion of recovered oil and / or hydrocarbon deposits.

10. The method according to any one of claims 1 to 9, further comprising the steps of:
separating nitrogen and oxygen from air; and
using said oxygen in the combustion of recovered oil and / or hydrocarbon deposits.

11. The method according to any one of claims 1 to 10, further comprising injecting nitrogen into said subterranean formation.

12. The method according to claim 11, wherein said injected nitrogen is obtained at least in part by separation from air.

13. The method according to any one of claims 1 to 12, wherein the progression of a front of displacement of oil or other hydrocarbons is monitored through seismic or volumetric methods.

## Patentansprüche

1. Verfahren zur Gewinnung von Öl oder anderen Kohlenwasserstoffablagerungen aus einer unterirdischen Formation, welches Verfahren die folgenden Schritte umfasst:
a) Bereitstellen von Produktionswasser, wobei das Produktionswasser während der Öl- und Gasproduktion an die Oberfläche gebracht wird und einen ersten Salzgehalt aufweist;
b) Verarbeiten des Produktionswassers durch Verdünnung zur Bildung eines wässrigen Fluids, welches einen Salzgehalt aufweist, der niedriger als der erste Salzgehalt ist;
c) Sequentielles Injizieren des gebildeten wässrigen Fluids in die unterirdische Formation entweder vor und/oder nach dem Injizieren eines Kohlendioxid umfassenden zweiten Fluids in die Formation; und
d) Sammeln von durch die injizierten Fluide verdrängten Kohlenwasserstoffen, wobei das Verfahren ferner den Schritt des Verbrennens einer Fraktion des rückgewonnenen Öls und/oder der Kohlenwasserstoffablagerungen umfasst, und wobei aus den Produkten des Verbrennens des rückgewonnenen Öls und/oder der Kohlenwasserstoffablagerungen kondensiertes Wasser im Schritt b) zur Verdünnung des Produktionswassers verwendet wird.

2. Verfahren nach Anspruch 1, wobei das wässrige Fluid als eine Flüssigkeit injiziert wird, und das zweite Fluid Kohlendioxid in der dichten Phase umfasst.

3. Verfahren nach Anspruch 1 oder Anspruch 2, wobei der durchschnittliche Gehalt an gelöstem Salz des injizierten, verarbeiteten wässrigen Fluids weniger als 10.000 ppm gelöste Gesamtfeststoffe (TDS), bevorzugt weniger als 5.000 ppm TDS, noch bevorzugter weniger als 2.000 ppm TDS, beträgt.

4. Verfahren nach Anspruch 1 oder Anspruch 2, wobei das injizierte, verarbeitete wässrige Fluid einen mehrwertigen Kationengehalt aufweist, der weniger als 0,02 Mol %, bevorzugt weniger als 0,005 Mol %, beträgt.

5. Verfahren nach einem der Ansprüche 1 bis 4, wobei das verarbeitete wässrige Fluid vor dem zweiten Fluid in die unterirdische Formation injiziert wird.

6. Verfahren nach einem der Ansprüche 1 bis 5, wobei das verarbeitete wässrige Fluid und das zweite Fluid jeweils für einen Zeitraum von 0,1 bis 500 Tagen Dauer injiziert werden.

7. Verfahren nach einem der Ansprüche 1 bis 6, wobei der Injektionsschritt c) **dadurch gekennzeichnet ist, dass** er eine Vielzahl von Zyklen umfasst, wobei jeder Zyklus die sequentielle Injektion des verarbeiteten wässrigen Fluids und des Kohlendioxid umfassenden zweiten Fluids umfasst.

8. Verfahren nach einem der Ansprüche 1 bis 7, wobei das Volumenverhältnis des injizierten wässrigen Gesamtfluids und des injizierten zweiten Gesamtfluids in einem einzelnen Injektionszyklus im Bereich von 0,8:1 bis 5:1 liegt.

9. Verfahren nach den Ansprüchen 1 bis 8, wobei zumindest ein Teil des injizierten Kohlendioxids als ein Produkt des Verbrennens von rückgewonnenem Öl und/oder Kohlenwasserstoffablagerungen erhalten wird.

10. Verfahren nach einem der Ansprüche 1 bis 9, ferner umfassend die folgenden Schritte:
Trennen des Stickstoffs und Sauerstoffs von der Luft; und
Verwenden des Sauerstoffs beim Verbrennen von rückgewonnenem Öl und/oder Kohlenwasserstoffablagerungen.

11. Verfahren nach einem der Ansprüche 1 bis 10, zusätzlich umfassend das Injizieren des Stickstoffs in die unterirdische Formation.

12. Verfahren nach Anspruch 11, wobei der injizierte Stickstoff zumindest teilweise durch Trennen von der Luft erhalten wird.

13. Verfahren nach einem der Ansprüche 1 bis 12, wobei die Progression einer Front von Verdrängung von Öl oder anderen Kohlenwasserstoffen durch seismische oder volumetrische Methoden überwacht wird.

## Revendications

1. Procédé pour la récupération de pétrole ou d'autres gisements d'hydrocarbures d'une formation souterraine, ledit procédé comprenant les étapes consistant à :
a) fournir de l'eau de production, ladite eau de production étant conduite à la surface lors de la production de pétrole et de gaz et ayant une première salinité;
b) traiter ladite eau de production par dilution pour former un fluide aqueux ayant une salinité inférieure à ladite première salinité ;
c) injecter ledit fluide aqueux formé dans la formation souterraine de manière séquentielle avant et / ou après l'injection d'un deuxième fluide comprenant dioxyde de carbone dans ladite formation ; et,
d) collecter des hydrocarbures déplacés par les fluides injectés,
dans lequel le procédé comprend en outre l'étape de combustion d'une fraction de gisements de pétrole et / ou d'hydrocarbures récupérés, et dans lequel de l'eau condensée à partir des produits de combustion desdits gisements de pétrole et / ou d'hydrocarbures récupérés est utilisée dans l'étape b) pour diluer ladite eau de production.

2. Procédé selon la revendication 1, dans lequel le fluide aqueux est injecté sous forme liquide, et le deuxième fluide comprend du dioxyde de carbone en phase dense.

3. Procédé selon la revendication 1 ou la revendication 2, dans lequel la teneur moyenne en sels dissous du fluide aqueux traité injecté est inférieure à 10.000 ppm de matières dissoutes totales (TDS), de préférence inférieure à 5.000 ppm de TDS, plus préférablement inférieure à 2.000 ppm de TDS.

4. Procédé selon la revendication 1 ou 2, dans lequel le fluide aqueux traité injecté présente une teneur en cations multivalents inférieure à 0,02% en moles, de préférence inférieure à 0,005% en moles.

5. Procédé selon l'une quelconque des revendications 1 à 4, dans lequel ledit fluide aqueux traité est injecté dans la formation souterraine avant ledit deuxième fluide.

6. Procédé selon l'une quelconque des revendications 1 à 5, dans lequel ledit fluide aqueux traité et ledit deuxième fluide sont chacun injectés pendant une durée de 0,1 à 500 jours.

7. Procédé selon l'une quelconque des revendications 1 à 6, dans lequel ladite étape d'injection c) est **caractérisée en ce qu'**elle comprend une pluralité de cycles, chaque cycle comprenant l'injection séquentielle du fluide aqueux traité et du deuxième fluide comprenant du dioxyde de carbone.

8. Procédé selon l'une quelconque des revendications 1 à 7, dans lequel le rapport en volume du fluide aqueux injecté total et du deuxième fluide injecté total dans un seul cycle d'injection est dans la plage de 0,8:1 à 5:1.

9. Procédé selon les revendications 1 à 8, dans lequel au moins une partie du dioxyde de carbone injecté est obtenue sous forme d'un produit de combustion de gisements de pétrole et / ou d'hydrocarbures récupérés.

10. Procédé selon l'une quelconque des revendications 1 à 9, comprenant en outre les étapes consistant à :
séparer l'azote et l'oxygène de l'air ; et
utiliser ledit oxygène dans la combustion de gisements de pétrole et / ou d'hydrocarbures récupérés.

11. Procédé selon l'une quelconque des revendications 1 à 10, comprenant en outre l'injection d'azote dans ladite formation souterraine.

12. Procédé selon la revendication 11, dans lequel ledit azote injecté est obtenu au moins en partie par séparation de l'air.

13. Procédé selon l'une quelconque des revendications 1 à 12, dans lequel la progression d'un front de déplacement de pétrole ou d'autres hydrocarbures est surveillée par des méthodes sismiques ou volumétriques.
